# EUROPEAN PATENT SPECIFICATION

(11) **EP 4 546 557 B1**
(45) Date of publication and mention of the grant of the patent: **17.06.2026**
(21) Application number: 22948291.4
(22) Date of filing: 28.06.2022
(51) Int. Cl.: H01M 50/691, H01M 50/249, H01M 50/209, F16K 31/00, F16K 24/04, H01M 50/325, H01M 50/333

(54) **LIQUID DISCHARGE MECHANISM, BATTERY BOX BODY, BATTERY AND ELECTRIC DEVICE**
FLÜSSIGKEITSAUSSTOSSMECHANISMUS, BATTERIEKASTENKÖRPER, BATTERIE UND ELEKTRISCHE VORRICHTUNG
MÉCANISME D'ÉVACUATION DE LIQUIDE, CORPS DE BOÎTIER DE BATTERIE, BATTERIE ET DISPOSITIF ÉLECTRIQUE

(43) Date of publication of application: 30.04.2025
(73) Proprietor: Contemporary Amperex Technology (Hong Kong) Limited, Central (HK)
(72) Inventor: LONG, Chao, Ningde, Fujian 352100 (CN); ZHANG, Wenhui, Ningde, Fujian 352100 (CN); CHEN, Xingdi, Ningde, Fujian 352100 (CN); WANG, Peng, Ningde, Fujian 352100 (CN)
(74) Representative: Lorenz Seidler Gossel Part. mbB
(86) International application number: PCT/CN2022/101954
(87) International publication number: WO 2024/000169

(56) References cited:
- CN-A- 114 060 577
- CN-U- 215 816 322
- CN-U- 217 177 552
- DE-A1- 102020 123 730
- DE-A1- 102020 123 730
- US-A1- 2021 066 679
- US-A1- 2022 042 613

## Description

### TECHNICAL FIELD

This application relates to the field of battery technologies, and particularly to a liquid discharge mechanism, a battery box, a battery, and an electric apparatus.

### BACKGROUND

To ensure the normal use of batteries, the interior of the battery box must remain dry. Otherwise, contact between the liquid in the battery box and the electrically connected portion of the battery leads to insulation abnormality, high-voltage short circuit, or even fire and explosion of the battery.

Therefore, it is necessary to promptly discharge the liquid in the battery box to prevent it from affecting the use performance of the battery. US 2022/042613 A1 discloses a liquid discharge mechanism according to the preamble of claim 1. DE 10 2020 123730 A1 discloses another liquid discharge mechanism.

### SUMMARY

Given this, it is necessary to provide a liquid discharge mechanism, a battery box, a battery, and an electric apparatus to facilitate the timely discharge of the liquid in the battery box, keeping the interior of the battery box dry and ensuring the safe use of the battery.

According to a first aspect, this application provides a liquid discharge mechanism, including a valve seat, a valve core, and a deformation member. The valve seat has a mounting chamber, the valve core is assembled on the valve seat and at least partially accommodated in the mounting chamber, and the deformation member is accommodated in the mounting chamber and connected between the valve seat and the valve core. The deformation member is configured to deform after contacting a target liquid, separating the valve core and the valve seat, thus causing formation of a liquid discharge channel.

After the deformation member contacts the target liquid, the deformation member deforms and changes in volume, separating the valve core and the valve seat to cause formation of a liquid discharge channel. As a result, the target liquid can be promptly discharged from the liquid discharge channel, achieving automatic discharge of the target liquid and ensuring the dryness of the mounting environment of the liquid discharge mechanism.

In some embodiments, the valve core is movably assembled on the valve seat, and the deformation member is configured to be capable of deforming after contacting the target liquid, acting on movement of the valve core relative to the valve seat until the two separate to form the liquid discharge channel therebetween.

With the above structure, when the valve core and the valve seat are relatively stationary, a tight connection between the two can be achieved to ensure good sealing therebetween. When the valve core moves relative to the valve seat, a liquid discharge channel can be quickly formed between the two, causing the target liquid to be smoothly discharged through the liquid discharge channel, thus allowing for a good discharge effect.

In some embodiments, the valve core includes a mandrel and a base, the mandrel includes a first end, the first end is an end in an axial direction of the mandrel, the first end extends into and passes through the mounting chamber to be connected to the base, and the deformation member abuts between the valve seat and the base.

The mandrel can provide a support foundation for the base and the deformation member. Under the action of the deformation force of the deformation member, the base moves in a direction away from the valve seat, ensuring that the deformation amount of the deformation member on the axial direction of the mandrel is converted into a relative movement amount between the base and the valve seat, thereby forming a liquid discharge channel more quickly between the base and the valve seat, and allowing the target liquid to be discharged more rapidly.

In some embodiments, the base is detachably connected to the first end of the mandrel.

This allows for more flexible connection between the base and the mandrel and a more convenient mounting process of the liquid discharge mechanism. Additionally, because the base is detachably connected to the first end of the mandrel, when the deformation member contacts the target liquid and deforms, under the action of the deformation force of the deformation member, the base can drive the mandrel to move synchronously away from the valve seat along the axial direction of the mandrel, thereby forming the liquid discharge channel more quickly between the base and the valve seat.

In some embodiments, the liquid discharge mechanism includes a first sealing member, and the first sealing member is disposed on a surface of the base facing the valve seat. The first sealing member is configured as follows: when the deformation member is not in contact with the target liquid, the first sealing member is sealingly arranged between the valve seat and the base; and after the deformation member contacts the target liquid, at least part of the first sealing member detaches from at least one of the valve seat and the base, thus causing formation of the liquid discharge channel between the valve seat and the base. The arrangement of the first sealing member can improve the sealing performance between the valve seat and the base.

In some embodiments, a limiting portion is formed on the mandrel, the liquid discharge mechanism further includes an elastic member, and the elastic member abuts between the limiting portion and the valve seat along the axial direction of the mandrel.

Thus, the elastic member can provide a pre-tightening force between the mandrel and the valve seat, allowing for tighter connection between the two.

In some embodiments, the limiting portion is formed on part of the mandrel protruding outside the valve seat, and the limiting portion protrudes along a periphery of the mandrel.

Therefore, under the action of the deformation force of the deformation member, the mandrel follows the base to move synchronously in the direction away from the valve seat, converting the overall deformation amount of the deformation member to form a liquid discharge channel between the base and the valve seat, thus allowing the target liquid to be discharged more quickly from the liquid discharge channel.

In some embodiments, the deformation member is a liquid-absorbing swelling member. After the deformation member absorbs the liquid and swells, its volume increases, pushing the base to move in a direction away from the valve seat, separating the base and the valve seat, and forming a liquid discharge channel, thus allowing the target liquid to be smoothly discharged from the valve seat.

In some embodiments, the valve seat is provided with a bayonet, and the bayonet is connected between the outside and the mounting chamber. The bayonet can serve as an entry port for the target liquid to be discharged in the discharge structure to enter the mounting chamber of the liquid discharge mechanism, allowing the target liquid to contact the deformation member in the mounting chamber, and causing the deformation member to deform, thereby forming a liquid discharge channel between the base and the valve seat for the target liquid to be discharged.

According to a second aspect, this application provides a battery box, including a box body and a liquid discharge mechanism. The box body has an accommodating cavity therein, and the box body is provided with a connecting hole that enables communication between the outside and the accommodating cavity. A liquid discharge mechanism is assembled in the connecting hole. This liquid discharge mechanism is the liquid discharge mechanism as described above.

When the liquid discharge mechanism is assembled in the connecting hole, the liquid discharge mechanism can discharge the target liquid in the accommodating cavity, keeping the interior of the accommodating cavity in a dry state. This prevents the target liquid from infiltrating the electrically connected portion; otherwise, the infiltration causes safety hazards to the battery, such as insulation abnormality, high-voltage short circuit, or fire and explosion, thereby improving the safety performance of the battery. Additionally, the liquid discharge mechanism can respond immediately upon contact with the target liquid, without manual operation, effectively improving the discharge efficiency.

In some embodiments, the liquid discharge mechanism includes a second sealing member, and the second sealing member is sealingly connected between the box body and the valve seat. The arrangement of the second sealing member can convert the rigid connection between the box body and the valve seat into an elastic connection, allowing for tighter connection between the box body and the valve seat and improving the air tightness of the accommodating cavity.

In some embodiments, the valve seat in the liquid discharge mechanism is provided with the bayonet connected between the outside and the mounting chamber, the valve seat is mounted in the connecting hole via the bayonet, and an end of the bayonet abuts against a wall of the accommodating cavity.

The bayonet can fix the liquid discharge mechanism to the bottom plate of the box body and sealingly connect it in the connecting hole. In addition, the bayonet can also serve as an entry port for the target liquid in the accommodating cavity to enter the mounting chamber, which is conducive for the target liquid to enter the mounting chamber and contact the deformation member.

In some embodiments, the box body includes a top cover, a side plate, and a bottom plate, the top cover, the side plate, and the bottom plate jointly enclose the accommodating cavity, and the connecting hole is provided on the bottom plate. The arrangement of the connecting hole on the bottom plate is more conducive to discharging the target liquid in the accommodating cavity.

In some embodiments, at least two such connecting holes are provided, and the connecting holes are each uniformly disposed along an outer edge of the bottom plate. Thus, the target liquid at different positions of the bottom plate can be collected and discharged via different connecting holes, allowing for a more thorough discharge of the target liquid.

In some embodiments, the bottom plate is provided with a flow guide portion, and the flow guide portion is configured to guide the target liquid to the connecting hole. The flow guide portion can guide the target liquid at various positions on the bottom plate and gather it around the connecting holes, facilitating the discharge of the target liquid from the accommodating cavity via the connecting holes.

In some embodiments, the flow guide portion is constructed as a flow guide slot, and a height of a bottom wall of the flow guide slot gradually increases from one end connected to the connecting hole to the other end. Thus, the target liquid can be collected through the flow guide slot and flow in the flow guide slot towards the connecting hole, increasing the flow speed of the target liquid and thereby increasing the discharge speed of the target liquid.

According to a third aspect, this application provides a battery, including the battery box described above and a battery cell accommodated in the accommodating cavity.

According to a fourth aspect, this application provides an electric apparatus, including the battery described above, where the battery is configured to supply electric energy.

According to the above liquid discharge mechanism, the battery box, the battery, and the electric apparatus, when the interior of the accommodating cavity of the battery box remains dry, the liquid discharge mechanism can be used to seal the connecting hole, keeping the accommodating cavity in the sealed state, thus ensuring the normal operation of the battery cell in the accommodating cavity. When the target liquid enters the accommodating cavity, the deformation member in the liquid discharge mechanism can deform upon contact with the target liquid, forming a liquid discharge channel between the valve core and the valve seat at the first instance. In this way, the interior of the accommodating cavity communicates with the exterior, facilitating the discharge of the target liquid out of the accommodating cavity, keeping the environment of the accommodating cavity dry, and reducing the likelihood of safety incidents.

### BRIEF DESCRIPTION OF DRAWINGS

Persons of ordinary skill in the art will be clear about various other advantages and benefits by reading the detailed description of the preferred embodiments below. The accompanying drawings are merely intended to show the preferred embodiments and are not intended to limit this application. In addition, in all the accompanying drawings, the same reference signs represent the same components. In the accompanying drawings:
FIG. 1 is a schematic structural diagram of a vehicle according to an embodiment;
FIG. 2 is a schematic structural exploded view of a battery according to an embodiment;
FIG. 3 is a schematic structural exploded view of a battery cell according to an embodiment;
FIG. 4 is a partially enlarged view of the liquid discharge mechanism in a non-absorbing state according to an embodiment;
FIG. 5 is a partially enlarged view of the liquid discharge mechanism in an absorbing state according to an embodiment;
FIG. 6 is a schematic structural diagram of the liquid discharge mechanism according to an embodiment;
FIG. 7 is a schematic structural exploded view of a battery box according to an embodiment;
FIG. 8 is a top view of the battery box shown in FIG. 7; and
FIG. 9 is a cross-sectional view along direction A-A in FIG. 7.

In the figure: 1000. vehicle; 100. battery; 200. controller; 300. motor; 10. battery box; 20. battery cell; 11. first portion; 12. second portion; 13. box body; 14. liquid discharge mechanism; 21. end cover; 22. housing; 23. cell assembly; 21a. electrode terminal; 131. accommodating cavity; 132. connecting hole; 133. top cover; 134. side plate; 135. bottom plate; 141. valve seat; 142. valve core; 143. deformation member; 144. liquid discharge channel; 145. first sealing member; 146. elastic member; 147. second sealing member; 1411. mounting chamber; 1412. bayonet; 1421. mandrel; 1422. base; and 1421a. limiting portion.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the technical terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In the structure of the battery, several battery cells are electrically connected through busbars to form an energy body, and the energy body is accommodated in the accommodating cavity of the battery box, thus forming a complete battery structure. To ensure the normal use of the battery, it is necessary to keep the environment in the accommodating cavity dry. When a liquid such as water enters the accommodating cavity, the liquid submerges the electrically connected portions, easily resulting in battery insulation abnormality, high-voltage short circuit, or even fire and explosion.

However, the applicant has found that in actual use, batteries often have issues such as sealing failure. When the battery sealing fails, if there is liquid in the battery mounting environment, the liquid easily enters the accommodating cavity, affecting the safety performance of the battery.

Specifically, for example, when the battery is used in a vehicle, if the vehicle wades through water, an external liquid easily enters the accommodating cavity through the battery box and submerges the electrically connected portions, affecting the safety performance of the battery.

When the above situation occurs, the battery box is usually manually opened to discharge the internal liquid therein. However, this method is not only cumbersome to operate but also cannot discharge water from the battery box at the first instance of water ingress, which is likely to cause safety incidents due to untimely drainage.

Based on the above considerations, to discharge the liquid in the battery box and resolve the problem of untimely discharge of the liquid in the battery box, the inventors have conducted in-depth research and designed a battery box. A connecting hole is provided in the battery box and a liquid discharge mechanism is sealingly arranged in the connecting hole, such that the liquid discharge mechanism can automatically open at the first instance of the target liquid entering the battery box, promptly achieving the discharge of the target liquid, keeping the interior of the battery box dry, and reducing the likelihood of safety incidents.

The battery described in the embodiments of this application is suitable for electric apparatuses, and the electric apparatuses can include but are not limited to mobile phones, laptops, electric toys, electric tools, electric bicycles, electric vehicles, ships, and spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

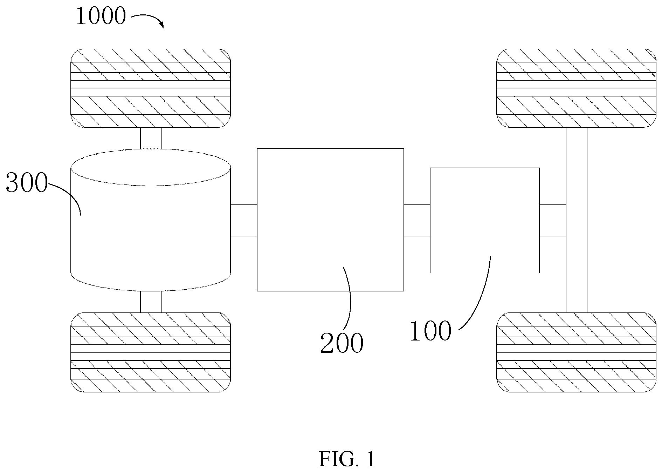

Refer to FIG. 1, which is a schematic structural diagram of a vehicle 1000 according to some embodiments of this application. The vehicle 1000 may be a fossil fuel vehicle, a natural gas vehicle, or a new energy vehicle. The new energy vehicle may be a pure electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power supply for the vehicle 1000 but also a driving power source for the vehicle 1000, replacing or partially replacing fossil fuel or natural gas to provide driving traction for the vehicle 1000.

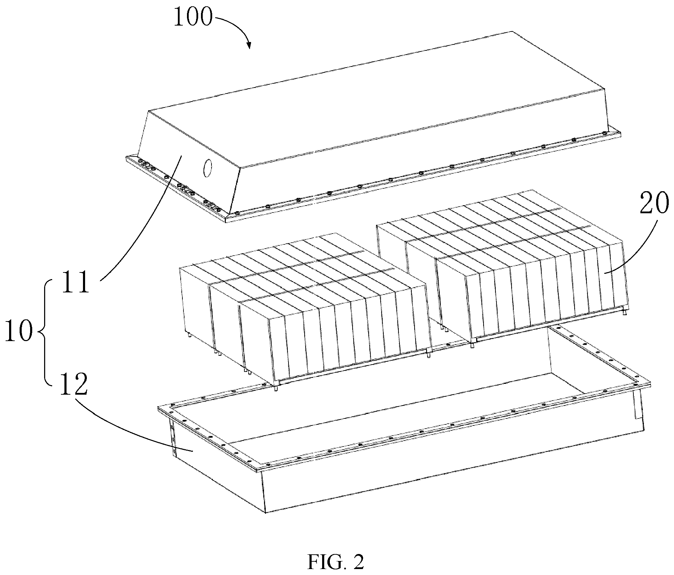

Refer to FIG. 2, which is an exploded view of a battery 100 according to some embodiments of this application. The battery 100 includes a battery box 10 and a battery cell 20, where the battery cell 20 is accommodated in the battery box 10. The battery box 10 is configured to provide an accommodating space for the battery cell 20, and the battery box 10 may be a variety of structures. In some embodiments, battery box 10 may include a first portion 11 and a second portion 12. The first portion 11 and the second portion 12 fit together such that the first portion 11 and the second portion 12 jointly define an accommodating cavity for the battery cell 20. The second portion 12 may be a hollow structure with one end open, and the first portion 11 may be a plate structure. The first portion 11 covers an open side of the second portion 12, so that the first portion 11 and the second portion 12 jointly define an accommodating cavity. Alternatively, the first portion 11 and the second portion 12 may each be a hollow structure with one side open, and the open side of the first portion 11 covers the open side of the second portion 12. Certainly, the battery box 10 formed by the first portion 11 and the second portion 12 may be of a variety of shapes, for example, cylinder or cuboid.

In the battery 100, the battery cell 20 is present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed by a plurality of battery cells 20 being connected in series, parallel, or series-parallel first to form a battery module, and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

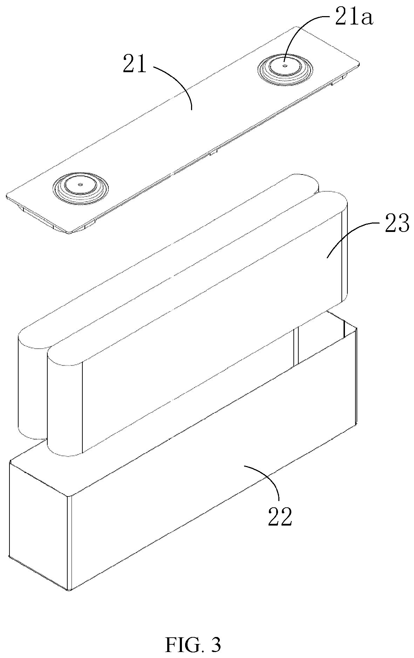

Refer to FIG. 3, which is a schematic structural exploded view of a battery cell 20 according to some embodiments of this application. The battery cell 20 refers to a smallest unit constituting a battery. As shown in FIG. 3, the battery cell 20 includes an end cover 21, a housing 22, a cell assembly 23, and other functional components.

The end cover 21 refers to a component that covers an opening of the housing 22 to isolate an internal environment of the battery cell 20 from an external environment. A shape of the end cover 21 is not limited and may be adapted to a shape of the housing 22 to fit the housing 22. Optionally, the end cover 21 may be made of a material with certain hardness and strength (for example, aluminum alloy), so that the end cover 21 is less likely to deform when subjected to extrusion and collision, allowing the battery cell 20 to have higher structural strength and enhanced safety performance. The end cover 21 may be provided with functional components such as an electrode terminal 21a. The electrode terminal 21a may be configured to electrically connect to the cell assembly 23 for outputting or inputting electric energy of the battery cell 20. In some embodiments, the end cover 21 may be further provided with a pressure relief mechanism for releasing internal pressure when the internal pressure or temperature of the battery cell 20 reaches a threshold. The end cover 21 may also be made of various materials such as copper, iron, aluminum, stainless steel, aluminum alloy, and plastic. This is not particularly limited in the embodiments of this application. In some embodiments, an insulator may also be provided at an inner side of the end cover 21. The insulator may be configured to isolate an electrically connected component in the housing 22 from the end cover 21 to reduce the risk of short circuit. For example, the insulator may be made of plastic, rubber, or the like.

The housing 22 is an assembly configured to form the internal environment of the battery cell 20 together with the end cover 21, where the formed internal environment may be configured to accommodate the cell assembly 23, an electrolyte, and other components. The housing 22 and the end cover 21 may be independent components, and an opening may be provided in the housing 22, so that the end cover 21 can close the opening to form the internal environment of the battery cell 20. Without limitation, the end cover 21 and the housing 22 may also be integrated. Specifically, the end cover 21 and the housing 22 may form a shared connection surface before other components are disposed inside the housing, and then the end cover 21 covers the housing 22 when inside of the housing 22 needs to be enclosed. The housing 22 may be of various shapes and sizes, for example, a rectangular shape, a cylindrical shape, and a hexagonal prism shape. Specifically, the shape of the housing 22 may be determined according to a specific shape and size of the cell assembly 23. The housing 22 may be made of various materials such as copper, iron, aluminum, stainless steel, aluminum alloy, and plastic. This is not particularly limited in the embodiments of this application.

The cell assembly 23 is a component in which electrochemical reactions take place in the battery cell 100. The housing 22 may include one or more cell assemblies 23. The cell assembly 23 is mainly formed by winding or stacking a positive electrode plate and a negative electrode plate, and a separator is generally provided between the positive electrode plate and the negative electrode plate. Parts of the positive electrode plate and the negative electrode plate that have active substances constitute a main body of the cell assembly 23, while parts of the positive electrode plate and the negative electrode plate that have no active substances separately constitute a tab. A positive electrode tab and a negative electrode tab may both be located at one end of the main body or be located at two ends of the main body respectively. During charging and discharging of the battery, a positive electrode active substance and a negative electrode active substance react with the electrolyte, and the tabs are connected to the electrode terminals to form a current loop.

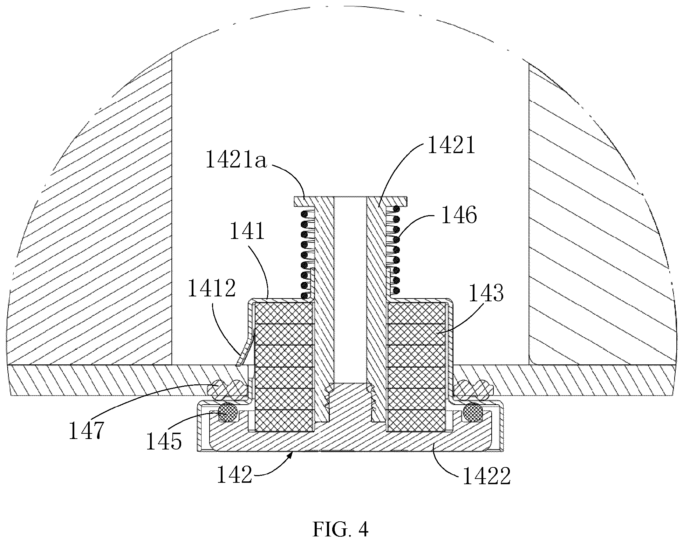

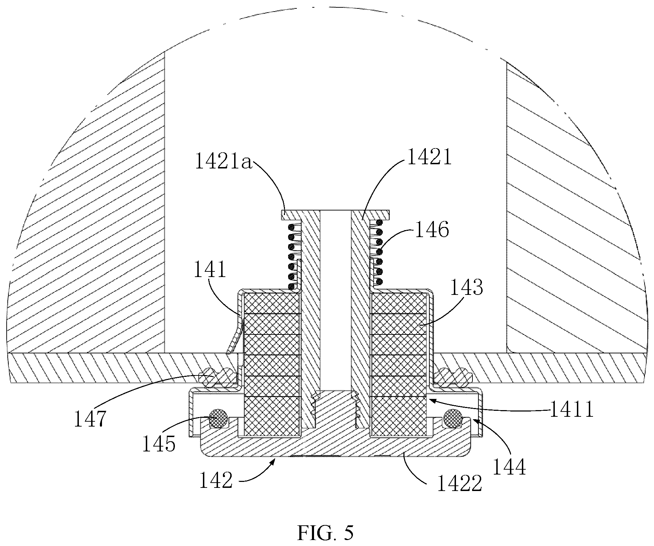

Referring to FIGs. 4 and 5, an embodiment of this application provides a liquid discharge mechanism 14, including a valve seat 141, a valve core 142, and a deformation member 143. The valve seat 141 has a mounting chamber 1411. The valve core 142 is assembled on the valve seat 141 and at least partially accommodated in the mounting chamber 1411, and the deformation member 143 is accommodated in the mounting chamber 1411 and connected between the valve seat 141 and the valve core 142. In addition, the deformation member 143 is configured to deform after contacting a target liquid, separating the valve core 142 and the valve seat 141, thus causing formation of a liquid discharge channel 144.

The above liquid discharge mechanism 14 can be applied to the battery box 10 to achieve the discharge of the target liquid in the accommodating cavity 131 of the battery box 10. Certainly, the liquid discharge mechanism 14 can also be applied to other apparatuses, which will not be elaborated herein.

It should be noted that the valve seat 141 refers to the part of the liquid discharge mechanism 14 that is fixedly connected to an external structure. For example, when the liquid discharge mechanism 14 is applied to the battery box 10, the valve seat 141 can connect the liquid discharge mechanism 14 and the battery box 10, fixing the liquid discharge mechanism 14 in the battery box 10.

The valve core 142 refers to the part of the liquid discharge mechanism 14 that can cooperate with the valve seat 141 to open and close the liquid discharge channel 144.

The deformation member 143 refers to the part that deforms upon contact with the target liquid and, under its deformation force, separates the valve core 142 from the valve seat 141, causing formation of the liquid discharge channel 144.

In addition, the target liquid refers to liquid substances that need to be discharged by the liquid discharge mechanism 14 and can include one or more of water, coolant, and another liquid substance.

As shown in FIG. 4, when the deformation member 143 does not contact the target liquid, the volume of the deformation member 143 does not change. At this time, the valve core 142 is tightly connected to the valve seat 141, that is, the liquid discharge mechanism 14 is in a closed state. As shown in FIG. 5, after the deformation member 143 contacts the target liquid and deforms, the volume of the deformation member 143 changes, driving the valve core 142 to separate from the valve seat 141 and causing the formation of the liquid discharge channel 144, that is, the liquid discharge mechanism 14 is in an open state. As a result, the target liquid can be promptly discharged from the liquid discharge channel 144, achieving automatic discharge of the target liquid and ensuring the dryness of the mounting environment of the liquid discharge mechanism 14.

Specifically, when the liquid discharge mechanism 14 is applied to the battery box 10, under normal circumstances, the accommodating cavity 131 of the battery box 10 is in a dry state. In this case, the deformation member 143 does not contact the target liquid, and the liquid discharge mechanism 14 is in a closed state, isolating the accommodating cavity 131 of the battery box 10 from the external environment. When the target liquid enters the battery box 10, the deformation member 143 contacts the target liquid and deforms. Under the action of the deformation force of the deformation member 143, the liquid discharge mechanism 14 opens, and the valve core 142 separates from the valve seat 141, forming the liquid discharge channel 144, such that the target liquid can be discharged out of the accommodating cavity 131 through the liquid discharge channel 144. Thus, the environment in the accommodating cavity 131 remains dry, preventing the target liquid from soaking the electrically connected portions in the accommodating cavity 131, which otherwise could lead to safety hazards to the battery 100, such as insulation abnormality, high-voltage short circuit, or fire and explosion, thereby improving the safety performance of the battery 100.

In addition, the liquid discharge mechanism 14 can automatically open under the deformation action of the deformation member 143 when the deformation member 143 contacts the target liquid, without manual operation, effectively improving the discharge efficiency.

It should be noted that the volume change of the deformation member 143 can be an increase or decrease, and through the volume change, the liquid discharge channel 144 between the valve core 142 and the valve seat 141 switches from a closed state when the deformation member 143 does not deform to an open state, facilitating the discharge of the target liquid out of the liquid discharge channel 144.

In some embodiments, the valve core 142 is movably assembled on the valve seat 141, and the deformation member 143 is configured to be capable of deforming after contacting the target liquid, acting on movement of the valve core 142 relative to the valve seat 141 until the liquid discharge channel 144 is formed therebetween.

The valve core 142 can move relative to the valve seat 141. After the deformation member 143 contacts the target liquid, its volume changes, causing the valve core 142 to move in the direction away from the valve seat 141 under the action of the deformation force of the deformation member 143. This results in the separation of the valve core 142 from the valve seat 141, forming a liquid discharge channel 144 for the target liquid to be discharged.

With the above structure, when the valve core 142 and the valve seat 141 are relatively stationary, a tight connection between the two can be achieved to ensure good sealing therebetween. When the valve core 142 moves relative to the valve seat 141, a liquid discharge channel 144 can be quickly formed between the two, causing the target liquid to be smoothly discharged through the liquid discharge channel 144, thus allowing for a good discharge effect.

In some embodiments, the valve core 142 includes a mandrel 1421 and a base 1422, the mandrel includes a first end, and the first end is an end in an axial direction of the mandrel. The first end extends into and passes through the mounting chamber 1411 to be connected to the base 1422, and the deformation member 143 abuts between the valve seat 141 and the base 1422.

Specifically, the deformation member 143 deforms after contacting the target liquid, and the base 1422 moves in the direction away from the valve seat 141 under the action of the deformation force, resulting in the separation therebetween and forming the liquid discharge channel 144.

Specifically, the mandrel 1421 is constructed as a hollow shaft structure, and the center position of the base 1422 protrudes upward to form a connecting portion. The connecting portion is inserted into the mandrel 1421 to achieve a connection with the mandrel 1421.

Furthermore, the connecting portion may be elastically connected to the mandrel 1421 by, for example, arranging an elastic connecting member. The initial state of the elastic connecting member is a compressed state, thereby providing a pre-tightening force for the connection between the base 1422 and the mandrel 1421. After the deformation member 143 contacts the target liquid, its volume changes, and the compression amount of the elastic connecting member changes under the deformation force, causing the separation between the mandrel 1421 and the base 1422, and gradually forming the liquid discharge channel 144 for the target liquid to be discharged out of the liquid discharge channel 144.

Additionally, the mandrel 1421 can provide a support foundation for the base 1422 and the deformation member 143. The deformation member 143 circumferentially surrounds the mandrel 1421 and fills the space between the mandrel 1421 and the valve seat 141. One end of the deformation member 143 along the axial direction of the mandrel 1421 abuts against the base 1422 and the other end abuts against the valve seat 141, ensuring that deformation amount of the deformation member 143 in the axial direction of the mandrel 1421 is converted into a movement amount that separates the base 1422 from the valve seat 141, thereby forming the liquid discharge channel 144 between the base 1422 and the valve seat 141 more quickly, allowing the target liquid to be discharged more rapidly.

In some embodiments, the base 1422 is detachably connected to the first end of the mandrel 1421. Specifically, the deformation member 143 deforms after contacting the target liquid, causing the base 1422 to drive the mandrel 1421 to move along the axial direction thereof under the action of the deformation force, resulting in the separation between the base 1422 and the valve seat 141, and forming a liquid discharge channel 144.

Specifically, the base 1422 and the first end of the mandrel 1421 can be threadedly connected, enabling a detachable connection therebetween. This allows for more flexible connection between the base 1422 and the mandrel 1421 and a more convenient mounting process of the liquid discharge mechanism 14.

Additionally, when the base 1422 is detachably connected to the first end of the mandrel 1421 and the deformation member 143 contacts the target liquid and deforms, under the action of the deformation force of the deformation member 143, the base 1422 can drive the mandrel 1421 to move synchronously away from the valve seat 141 along the axial direction of the mandrel 1421, thereby forming the liquid discharge channel 144 more quickly between the base 1422 and the valve seat 141.

In some embodiments, the liquid discharge mechanism 14 includes a first sealing member 145, and the first sealing member 145 is disposed on a surface of the base 1422 facing the valve seat 141. The first sealing member 145 is configured as follows:

When the deformation member 143 is not in contact with the target liquid, the first sealing member 145 is sealingly arranged between the valve seat 141 and the base 1422; and after the deformation member 143 contacts the target liquid, at least part of the first sealing member 145 detaches from at least one of the valve seat 141 and the base 1422, thus causing formation of the liquid discharge channel 144 between the valve seat 141 and the base 1422.

To facilitate the fixation of the first sealing member 145, a first fixing groove may be provided on the surface of the base 1422 facing the valve seat 141, and the first sealing member 145 may be limited in the first fixing groove. Thus, the first sealing member 145 may be fixed to the base 1422.

Furthermore, to ensure the sealing performance between the valve seat 141 and the base 1422, the first sealing member 145 is designed as an elastic sealing ring, and correspondingly, the first fixing groove is constructed as an annular groove surrounding the connecting portion. When the deformation member 143 does not contact the target liquid, the first sealing member 145 remains in a compressed state between the valve seat 141 and the base 1422, thereby ensuring tight connection between the valve seat 141 and the base 1422 and improving the sealing performance.

Specifically, the first sealing member 145 may be made of elastic materials such as rubber and silicone, which are not exemplified one by one. The arrangement of the first sealing member 145 can improve the sealing performance between the valve seat 141 and the base 1422.

In some embodiments, a limiting portion 1421a is formed on the mandrel 1421, the liquid discharge mechanism 14 further includes an elastic member 146, and the elastic member 146 abuts between the limiting portion 1421a and the valve seat 141 along the axial direction of the mandrel 1421.

Specifically, the initial state of the elastic member 146 is a compressed state, thereby providing a pre-tightening force between the mandrel 1421 and the valve seat 141.

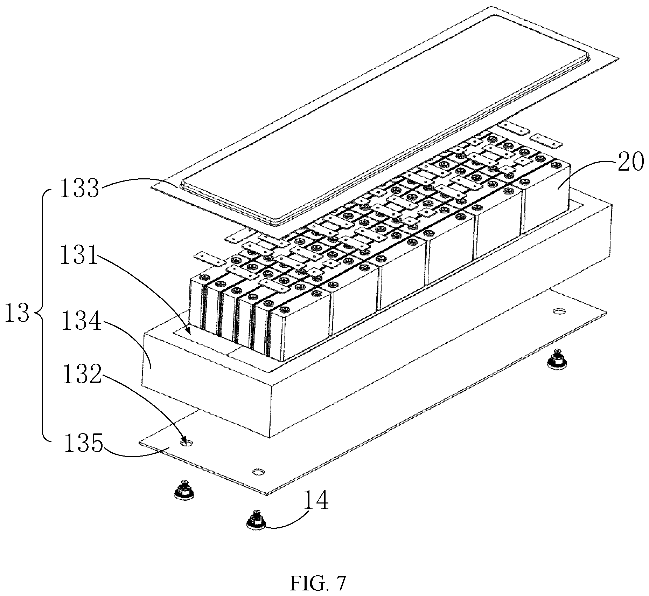

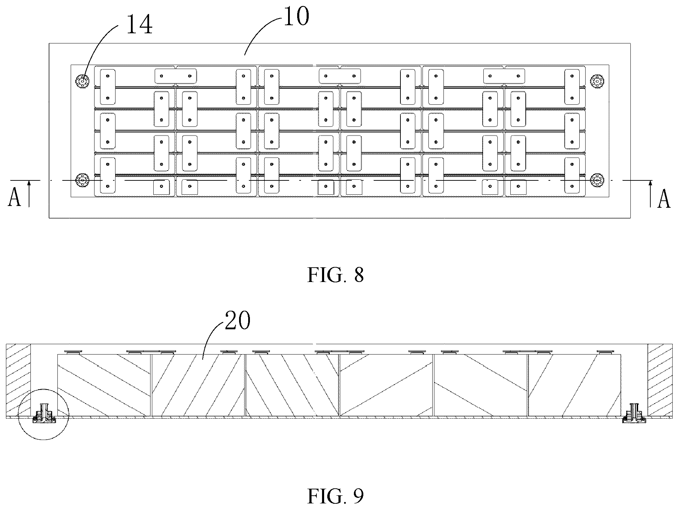

As shown in FIG. 7, in the initial state, the deformation member 143 does not contact the target liquid. At this time, under the action of the pre-tightening force of the elastic member 146, the base 1422 is tightly connected to the valve seat 141, and the deformation member 143 is tightly positioned between the base 1422 and the valve seat 141. As shown in FIG. 8, when the deformation member 143 contacts the target liquid and deforms, the base 1422 separates from the valve seat 141 under the action of the deformation force of the deformation member 143. At the same time, the base 1422 drives the mandrel 1421 to move synchronously, causing a change in the compression amount of the elastic member 146. During the synchronous movement of the base 1422 and the mandrel 1421, the liquid discharge channel 144 is formed between the base 1422 and the valve seat 141, allowing the target liquid to be discharged through the liquid discharge channel 144.

It should be noted that the elastic member 146 may be a spring or other elastic elements, as long as it can provide a pre-tightening force for the mandrel 1421 and the valve seat 141, which is not further elaborated herein.

In some embodiments, the limiting portion 1421a is formed on part of the mandrel 1421 protruding outside the valve seat 141, and the limiting portion 1421a protrudes along a periphery of the mandrel 1421.

Through the above structure, under the deformation action of the deformation member 143, the mandrel 1421 follows the base 1422 to synchronously separate from the valve seat 141, thereby converting the overall deformation amount of the deformation member 143, so as to form the liquid discharge channel 144 between the base 1422 and the valve seat 141, allowing the target liquid to be discharged more quickly through the liquid discharge channel 144.

In some embodiments, the deformation member 143 is a liquid-absorbing swelling member, meaning that the deformation member 143 can absorb the target liquid and increase in volume after absorbing the target liquid.

Specifically, in the initial state, the deformation member 143 does not absorb the target liquid, and its volume does not change. At this time, under the action of the pre-tightening force of the elastic member 146, the base 1422 is tightly connected to the valve seat 141, and the deformation member 143 is tightly positioned between the base 1422 and the valve seat 141.

After the deformation member 143 absorbs the target liquid, the deformation member 143 expands and increases in volume, pushing, along the axial direction of the mandrel 1421, the base 1422 to move in the direction away from the valve seat 141, thereby separating the base 1422 and the valve seat 141 and forming a liquid discharge channel 144 for the target liquid to be discharged. It can be understood that the deformation member 143 may be also provided a liquid-absorbing dissolving member, meaning that the deformation member 143 can absorb the target liquid and decrease in volume after absorbing the target liquid.

Specifically, when the deformation member 143 does not contact the target liquid, the deformation member 143 can block the liquid discharge channel 144 between the base 1422 and the valve seat 141. After the deformation member 143 absorbs the target liquid, the volume of the deformation member 143 decreases, thereby exposing the liquid discharge channel 144 between the base 1422 and the valve seat 141, allowing the target liquid to be discharged from the liquid discharge channel 144.

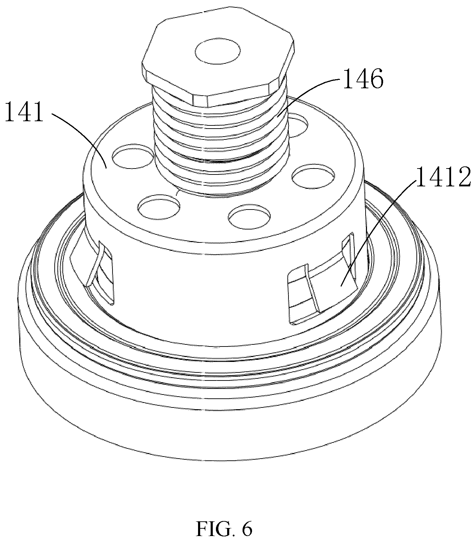

Referring to FIG. 6, in some embodiments, the valve seat 141 is provided with a bayonet 1412, and the bayonet 1412 is connected between the outside and the mounting chamber 1411. The bayonet 1412 can serve as an entry port for the target liquid to be discharged in the discharge structure to enter the mounting chamber 1411 of the liquid discharge mechanism 14, allowing the target liquid to contact the deformation member 143 in the mounting chamber 1411, and causing the deformation member 143 to deform, thereby forming a liquid discharge channel 144 between the base 1422 and the valve seat 141 for the target liquid to be discharged.

Referring to FIGs. 7, 8, and 9, based on the same concept as the above liquid discharge mechanism, an embodiment of this application provides a battery box 10, including a box body 13 and a liquid discharge mechanism 14. The box body 13 has an accommodating cavity 131, and a connecting hole 132, which enables communication between the outside and the accommodating cavity 131, is provided on the box body 13. The liquid discharge mechanism 14 is assembled in the connecting hole 132, and the liquid discharge mechanism 14 is the liquid discharge mechanism 14 as described above.

The box body 13 is constructed as the main part of the battery box 10, which may be enclosed by a top cover 133, side plates 134, and a bottom plate 135, forming an accommodating cavity 131. When the liquid discharge mechanism 14 is assembled in the connecting hole 132, the liquid discharge mechanism 14 can discharge the target liquid in the accommodating cavity 131, keeping the interior of the accommodating cavity 131 in a dry state. This prevents the target liquid from infiltrating the electrically connected portion; otherwise, the infiltration causes safety hazards to the battery 100, such as insulation abnormality, high-voltage short circuit, or fire and explosion, thereby improving the safety performance of the battery 100. Additionally, the liquid discharge mechanism 14 can respond immediately upon contact with the target liquid, without manual operation, effectively improving the discharge efficiency.

In some other embodiments, the liquid discharge mechanism 14 itself can also be activated to discharge the target liquid without contacting the target liquid. A detection member (not shown in the figure) and a control member (not shown in the figure) are disposed in the discharge mechanism 14. The detection member can detect the target liquid in the accommodating cavity 131, where the detected items may be the actual humidity value in the accommodating cavity 131 or the actual liquid level height of the target liquid in the accommodating cavity 131. When the actual humidity value exceeds the preset humidity value or the actual liquid level height exceeds the preset liquid level height, the detection member can transmit a detection signal to the control member, and then the control member drives the valve core 142 to separate from the valve seat 141, forming a liquid discharge channel 144 between the valve core 142 and the valve seat 141, thus allowing the target liquid to be discharged from the liquid discharge channel 144 out of the accommodating cavity 131.

Referring to FIGs. 4 and 5 again, in some embodiments, the liquid discharge mechanism 14 includes a second sealing member 147, and the second sealing member 147 is sealingly connected between the box body 13 and the valve seat 141.

Because the box body 13 and the valve seat 141 both are a rigid structure, a gap may be present when they are connected. Therefore, to ensure the air tightness of the accommodating cavity 131 in the initial state, a second sealing member 147 is provided between the box body 13 and the valve seat 141 to ensure tight connection between the box body 13 and the valve seat 141.

Furthermore, the second sealing member 147 is designed as an elastic sealing ring, surrounding the valve seat 141 and remaining in a compressed state to ensure tight connection between the valve seat 141 and the box body 13.

Specifically, the second sealing member 147 may be made of elastic materials such as rubber and silicone, which are not exemplified one by one. The arrangement of the second sealing member 147 can convert the rigid connection between the box body 13 and the valve seat 141 into an elastic connection, allowing for tighter connection between the box body 13 and the valve seat 141 and improving the air tightness of the accommodating cavity 131.

In some embodiments, the valve seat 141 is mounted in the connecting hole 132 via the bayonet 1412, and an end of the bayonet 1412 abuts against a wall of the accommodating cavity 131. The bayonet 1412 can fix the liquid discharge mechanism 14 to the bottom plate 135 of the box body 13 and sealingly connect it in the connecting hole 132. In addition, the bayonet 1412 can also serve as an entry port for the target liquid in the accommodating cavity 131 to enter the mounting chamber 1411, which is conducive for the target liquid to enter the mounting chamber 1411 and contact the deformation member 143.

Referring to FIGs. 7 and 8 again, further, the box body 13 includes a top cover 133, a side plate 134, and a bottom plate 135 The top cover 133, the side plate 134, and the bottom plate 135 jointly enclose the accommodating cavity 131, and the connecting hole 132 is provided on the bottom plate 135.

The bottom plate 135 refers to the end plate located below when the battery box 10 is assembled onto an electric apparatus. The top cover 133 refers to the end plate located above, opposite the bottom plate 135, when the battery box 10 is assembled onto an electric apparatus. Thus, the side plates 134 refer to the end plates surrounding the space between the top cover 133 and the bottom plate 135.

When the battery box 10 is assembled onto an electric apparatus, because the bottom plate 135 is at the lowest point in the assembled state, providing the connecting hole 132 on the bottom plate 135 can facilitate the discharge of the target liquid in the accommodating cavity 131.

In some embodiments, at least two such connecting holes 132 are provided, and the connecting holes 132 are each uniformly disposed along an outer edge of the bottom plate 135. Thus, the target liquid in a different position of the bottom plate 135 can be collected and discharged via a different connecting hole 132, allowing for a more thorough discharge of the target liquid.

Furthermore, when the battery box 10 is of a rectangular structure, the bottom plate 135 is a rectangular plate. In this case, four connecting holes 132 can be provided, respectively located at the four corners of the bottom plate 135, thus facilitating the collection and discharge of the target liquid at different positions in the accommodating cavity 131.

In some embodiments, the bottom plate 135 is provided with a flow guide portion (not shown in the figure), and the flow guide portion is configured to guide the target liquid to the connecting hole 132. The flow guide portion can guide the target liquid at various positions on the bottom plate 135 and gather it around the connecting holes 132, facilitating the discharge of the target liquid from the accommodating cavity 131 via the connecting holes 132.

Further, the flow guide portion is constructed as a flow guide slot, and a height of a bottom wall of the flow guide slot gradually increases from one end connected to the connecting hole 132 to the other end. Specifically, the flow guide slot is arranged with a certain slope, and the connecting hole 132 is located at the lowest point of the slope. Thus, the target liquid can flow downward along the flow guide slot, and the slope setting can increase the flow speed of the target liquid, thus increasing the discharge speed of the target liquid.

Based on the same conception as the battery box 10, this application provides a battery 100, including the battery box 10 described above and a battery cell 20 accommodated in the accommodating cavity 131.

Based on the same conception as the battery 100, this application provides an electric apparatus, including the battery 100 described above, where the battery 100 is configured to supply electric energy.

When some liquid discharge mechanisms 14 in this application are applied to the battery box 10, the liquid discharge mechanisms 14 may first be each sealed in one connecting hole 132, creating a sealed state in the accommodating cavity 131. When the battery 100 is in normal use, the accommodating cavity 131 always remains in a sealed state. When the sealing at other positions on the battery box 10 fails, the external target liquid enters the accommodating cavity 131. In this case, the target liquid accumulates on the bottom plate 135. The liquid can be guided by the flow guide portion on the bottom plate 135 to flow towards each connecting hole 132.

When the target liquid flows to the connecting hole 132, the target liquid can flow into the mounting chamber 1411 through the bayonet 1412 on the valve seat 141 and contact the deformation member 143. The deformation member 143 deforms after absorbing the target liquid, and increases in volume. Thus, it pushes the base 1422 to move in the direction away from the valve seat 141. At this time, the base 1422 and the valve seat 141 move away from each other. As the distance between the base 1422 and the valve seat 141 gradually increases, the compression amount of the first sealing member 145 between the base 1422 and the valve seat 141 gradually decreases. When the compression amount of the first sealing member 145 decreases to zero, the sealing interface between the base 1422 and the valve seat 141 fails, and the target liquid can flow out of the accommodating cavity 131 through the liquid discharge channel 144 between the base 1422 and the valve seat 141.

Technical features in the foregoing embodiments may be combined in any way. For brevity of description, not all possible combinations of the technical features in the foregoing embodiments are described. However, as long as there is no contradiction among combinations of these technical features, all the combinations should be considered within the scope of the appended claims.

The foregoing embodiments only represent several implementations of this application, and descriptions thereof are specific and detailed, but should not be construed as a limitation on the scope of this application patent. It should be noted that those of ordinary skill in the art can further make several modifications and improvements without departing from the scope of the appended claims.

## Claims

1. A liquid discharge mechanism (14), comprising:
a valve seat (141) having a mounting chamber (1411);
a valve core (142) assembled on the valve seat (141) and at least partially accommodated in the mounting chamber (1411); and
a deformation member (143) accommodated in the mounting chamber (1411) and connected between the valve seat (141) and the valve core (142);
wherein the deformation member (143) is configured to deform after contacting a target liquid, separating the valve core (142) and the valve seat (141), thus causing formation of a liquid discharge channel (144), **characterized in that** the deformation member (143) is configured that after contacting the target liquid, the volume of the deformation member (143) changes, causing the valve core (142) to move in the direction away from the valve seat (141) under an action of a deformation force of the deformation member (143).

2. The liquid discharge mechanism (14) according to claim 1, wherein the valve core (142) is movably assembled on the valve seat (141), and the deformation member (143) is configured to be capable of deforming after contacting the target liquid, acting on movement of the valve core (142) relative to the valve seat (141) until the two separate to form the liquid discharge channel (144) therebetween.

3. The liquid discharge mechanism (14) according to claim 2, wherein the valve core (142) comprises a mandrel (1421) and a base (1422), the mandrel (1421) comprises a first end, the first end is an end in an axial direction of the mandrel (1421), the first end extends into and passes through the mounting chamber (1411) to be connected to the base (1422), and the deformation member (143) abuts between the valve seat (141) and the base (1422).

4. The liquid discharge mechanism (14) according to claim 3, wherein the base (1422) is detachably connected to the first end of the mandrel (1421).

5. The liquid discharge mechanism (14) according to claim 3, wherein the liquid discharge mechanism (14) comprises a first sealing member (145), and the first sealing member (145) is disposed on a surface of the base (1422) facing the valve seat (141); and the first sealing member (145) is configured as follows:
when the deformation member (143) is not in contact with the target liquid, the first sealing member (145) is sealingly arranged between the valve seat (141) and the base (1422); and
after the deformation member (143) contacts the target liquid, at least part of the first sealing member (145) detaches from at least one of the valve seat (141) and the base (1422), thus causing formation of the liquid discharge channel (144) between the valve seat (141) and the base (1422).

6. The liquid discharge mechanism (14) according to any one of claims 1 to 5, wherein a limiting portion (1421a) is formed on the mandrel (1421), the liquid discharge mechanism (14) further comprises an elastic member (146), and the elastic member (146) abuts between the limiting portion (1421a) and the valve seat (141) along the axial direction of the mandrel (1421); optionally the limiting portion (1421a) is formed on part of the mandrel (1421) protruding outside the valve seat (141), and the limiting portion (1421a) protrudes along a periphery of the mandrel (1421).

7. The liquid discharge mechanism (14) according to any one of claims 1 to 5, wherein the deformation member (143) is a liquid-absorbing swelling member.

8. The liquid discharge mechanism (14) according to any one of claims 1 to 7, wherein the valve seat (141) is provided with a bayonet (1412), and the bayonet (1412) is connected between the outside and the mounting chamber (1411).

9. A battery box (10), comprising:
a box body (13) having an accommodating cavity (131) therein, wherein the box body (13) is provided with a connecting hole (132) that enables communication between the outside and the accommodating cavity (131); and
a liquid discharge mechanism (14) assembled in the connecting hole (132);
wherein this liquid discharge mechanism (14) is the liquid discharge mechanism (14) according to any one of claims 1 to 8.

10. The battery box (10) according to claim 9, wherein the liquid discharge mechanism (14) comprises a second sealing member (147), and the second sealing member (147) is sealingly connected between the box body (13) and the valve seat (141); or the valve seat (141) in the liquid discharge mechanism (14) is provided with the bayonet (1412) connected between the outside and the mounting chamber (1411), the valve seat (141) is mounted in the connecting hole (132) via the bayonet (1412), and an end of the bayonet (1412) abuts against a wall of the accommodating cavity (131).

11. The battery box (10) according to claim 9, wherein the box body (13) comprises a top cover (133), a side plate (134), and a bottom plate (135), the top cover (133), the side plate (134), and the bottom plate (135) jointly enclose the accommodating cavity (131), and the connecting hole (132) is provided on the bottom plate (135).

12. The battery box (10) according to claim 11, wherein at least two such connecting holes (132) are provided, and the connecting holes (132) are each uniformly disposed along an outer edge of the bottom plate (135).

13. The battery box (10) according to claim 11, wherein the bottom plate (135) is provided with a flow guide portion, and the flow guide portion is configured to guide the target liquid to the connecting hole (132); optionally the flow guide portion is constructed as a flow guide slot, and a height of a bottom wall of the flow guide slot gradually increases from one end connected to the connecting hole (132) to the other end.

14. A battery (100), comprising the battery box (10) according to any one of claims 9 to 13 and a battery cell (20) accommodated in the accommodating cavity (131).

15. An electric apparatus, comprising the battery (100) according to claim 14, wherein the battery (100) is configured to supply electrical energy.

## Patentansprüche

1. Flüssigkeitsabgabemechanismus (14), umfassend:
einen Ventilsitz (141) mit einer Aufnahmekammer (1411);
einen auf dem Ventilsitz (141) montierten Ventilkern (142), der zumindest teilweise in der Aufnahmekammer (1411) aufgenommen ist; und
ein in der Aufnahmekammer (1411) aufgenommenes Verformungselement (143), das zwischen dem Ventilsitz (141) und dem Ventilkern (142) verbunden ist;
wobei das Verformungselement (143) dazu ausgelegt ist, sich nach Kontakt mit einer Zielflüssigkeit zu verformen, den Ventilkern (142) und den Ventilsitz (141) voneinander zu trennen und dadurch die Ausbildung eines Flüssigkeitsabgabekanals (144) zu bewirken, **dadurch gekennzeichnet, dass** das Verformungselement (143) so ausgelegt ist, dass sich nach Kontakt mit der Zielflüssigkeit das Volumen des Verformungselements (143) ändert, wodurch der Ventilkern (142) unter Einwirkung einer Verformungskraft des Verformungselements (143) in eine vom Ventilsitz (141) weg gerichtete Richtung bewegt wird.

2. Flüssigkeitsabgabemechanismus (14) nach Anspruch 1, wobei der Ventilkern (142) beweglich auf dem Ventilsitz (141) montiert ist und das Verformungselement (143) dazu ausgelegt ist, sich nach Kontakt mit der Zielflüssigkeit verformen zu können und auf eine Bewegung des Ventilkerns (142) relativ zum Ventilsitz (141) einzuwirken, bis sich beide voneinander trennen, um den Flüssigkeitsabgabekanal (144) dazwischen auszubilden.

3. Flüssigkeitsabgabemechanismus (14) nach Anspruch 2, wobei der Ventilkern (142) einen Dorn (1421) und eine Basis (1422) umfasst, der Dorn (1421) ein erstes Ende umfasst, das erste Ende ein Ende in einer axialen Richtung des Dorns (1421) ist, das erste Ende in die Aufnahmekammer (1411) hineinragt und diese durchsetzt, um mit der Basis (1422) verbunden zu sein, und das Verformungselement (143) zwischen dem Ventilsitz (141) und der Basis (1422) anliegt.

4. Flüssigkeitsabgabemechanismus (14) nach Anspruch 3, wobei die Basis (1422) lösbar mit dem ersten Ende des Dorns (1421) verbunden ist.

5. Flüssigkeitsabgabemechanismus (14) nach Anspruch 3, wobei der Flüssigkeitsabgabemechanismus (14) ein erstes Dichtelement (145) umfasst und das erste Dichtelement (145) auf einer dem Ventilsitz (141) zugewandten Oberfläche der Basis (1422) angeordnet ist; und das erste Dichtelement (145) wie folgt ausgelegt ist:
wenn das Verformungselement (143) nicht mit der Zielflüssigkeit in Kontakt ist, ist das erste Dichtelement (145) dichtend zwischen dem Ventilsitz (141) und der Basis (1422) angeordnet; und
nachdem das Verformungselement (143) mit der Zielflüssigkeit in Kontakt kommt, löst sich zumindest ein Teil des ersten Dichtelements (145) von zumindest einem des Ventilsitzes (141) und der Basis (1422), wodurch die Ausbildung des Flüssigkeitsabgabekanals (144) zwischen dem Ventilsitz (141) und der Basis (1422) bewirkt wird.

6. Flüssigkeitsabgabemechanismus (14) nach einem der Ansprüche 1 bis 5, wobei an dem Dorn (1421) ein Begrenzungsabschnitt (1421a) ausgebildet ist, der Flüssigkeitsabgabemechanismus (14) ferner ein elastisches Element (146) umfasst und das elastische Element (146) zwischen dem Begrenzungsabschnitt (1421a) und dem Ventilsitz (141) entlang der axialen Richtung des Dorns (1421) anliegt; optional ist der Begrenzungsabschnitt (1421a) an einem Teil des Dorns (1421) ausgebildet, der aus dem Ventilsitz (141) nach außen vorsteht, und der Begrenzungsabschnitt (1421a) steht entlang eines Umfangs des Dorns (1421) vor.

7. Flüssigkeitsabgabemechanismus (14) nach einem der Ansprüche 1 bis 5, wobei das Verformungselement (143) ein flüssigkeitsabsorbierendes Quellungselement ist.

8. Flüssigkeitsabgabemechanismus (14) nach einem der Ansprüche 1 bis 7, wobei der Ventilsitz (141) mit einem Bajonett (1412) versehen ist und das Bajonett (1412) zwischen dem Außenbereich und der Aufnahmekammer (1411) verbunden ist.

9. Batteriegehäuse (10), umfassend:
einen Gehäusekörper (13), in dem eine Aufnahmekavität (131) ausgebildet ist, wobei der Gehäusekörper (13) mit einer Verbindungsöffnung (132) versehen ist, die eine Verbindung zwischen dem Außenbereich und der Aufnahmekavität (131) ermöglicht; und
einen in der Verbindungsöffnung (132) montierten Flüssigkeitsabgabemechanismus (14);
wobei dieser Flüssigkeitsabgabemechanismus (14) der Flüssigkeitsabgabemechanismus (14) nach einem der Ansprüche 1 bis 8 ist.

10. Batteriegehäuse (10) nach Anspruch 9, wobei der Flüssigkeitsabgabemechanismus (14) ein zweites Dichtelement (147) umfasst und das zweite Dichtelement (147) dichtend zwischen dem Gehäusekörper (13) und dem Ventilsitz (141) verbunden ist; oder wobei der Ventilsitz (141) in dem Flüssigkeitsabgabemechanismus (14) mit dem Bajonett (1412) versehen ist, das zwischen dem Außenbereich und der Aufnahmekammer (1411) verbunden ist, der Ventilsitz (141) über das Bajonett (1412) in der Verbindungsöffnung (132) montiert ist und ein Ende des Bajonetts (1412) gegen eine Wand der Aufnahmekavität (131) anliegt.

11. Batteriegehäuse (10) nach Anspruch 9, wobei der Gehäusekörper (13) einen oberen Deckel (133), eine Seitenplatte (134) und eine Bodenplatte (135) umfasst, der obere Deckel (133), die Seitenplatte (134) und die Bodenplatte (135) gemeinsam die Aufnahmekavität (131) umschließen und die Verbindungsöffnung (132) in der Bodenplatte (135) vorgesehen ist.

12. Batteriegehäuse (10) nach Anspruch 11, wobei zumindest zwei derartige Verbindungsöffnungen (132) vorgesehen sind und die Verbindungsöffnungen (132) jeweils gleichmäßig entlang eines Außenrandes der Bodenplatte (135) angeordnet sind.

13. Batteriegehäuse (10) nach Anspruch 11, wobei die Bodenplatte (135) mit einem Strömungsleitabschnitt versehen ist und der Strömungsleitabschnitt dazu ausgelegt ist, die Zielflüssigkeit zu der Verbindungsöffnung (132) zu leiten; optional ist der Strömungsleitabschnitt als Strömungsleitnut ausgebildet, und eine Höhe einer Bodenwand der Strömungsleitnut nimmt von dem einen, mit der Verbindungsöffnung (132) verbundenen Ende zu dem anderen Ende allmählich zu.

14. Batterie (100), umfassend das Batteriegehäuse (10) nach einem der Ansprüche 9 bis 13 und eine in der Aufnahmekavität (131) aufgenommene Batteriezelle (20).

15. Elektrisches Gerät, umfassend die Batterie (100) nach Anspruch 14, wobei die Batterie (100) dazu ausgelegt ist, elektrische Energie bereitzustellen.

## Revendications

1. Mécanisme de décharge de liquide (14), comprenant :
un siège de soupape (141) ayant une chambre de montage (1411) ;
un noyau de soupape (142) monté sur le siège de soupape (141) et au moins partiellement logé dans la chambre de montage (1411) ; et
un élément de déformation (143) logé dans la chambre de montage (1411) et raccordé entre le siège de soupape (141) et le noyau de soupape (142) ;
dans lequel l'élément de déformation (143) est configuré pour se déformer après être entré en contact avec un liquide cible, séparant le noyau de soupape (142) et le siège de soupape (141), provoquant ainsi la formation d'un canal de décharge de liquide (144), **caractérisé en ce que** l'élément de déformation (143) est configuré de telle sorte qu'après être entré en contact avec le liquide cible, le volume de l'élément de déformation (143) change, provoquant le déplacement du noyau de soupape (142) dans une direction s'éloignant du siège de soupape (141) sous l'action d'une force de déformation de l'élément de déformation (143).

2. Mécanisme de décharge de liquide (14) selon la revendication 1, dans lequel le noyau de soupape (142) est monté de manière mobile sur le siège de soupape (141), et l'élément de déformation (143) est configuré pour pouvoir se déformer après être entré en contact avec le liquide cible, en agissant sur le déplacement du noyau de soupape (142) par rapport au siège de soupape (141) jusqu'à ce que les deux se séparent pour former entre eux le canal de décharge de liquide (144).

3. Mécanisme de décharge de liquide (14) selon la revendication 2, dans lequel le noyau de soupape (142) comprend un mandrin (1421) et une base (1422), le mandrin (1421) comprend une première extrémité, la première extrémité étant une extrémité dans une direction axiale du mandrin (1421), la première extrémité s'étendant dans la chambre de montage (1411) et la traversant pour être raccordée à la base (1422), et l'élément de déformation (143) est en appui entre le siège de soupape (141) et la base (1422).

4. Mécanisme de décharge de liquide (14) selon la revendication 3, dans lequel la base (1422) est raccordée de manière détachable à la première extrémité du mandrin (1421).

5. Mécanisme de décharge de liquide (14) selon la revendication 3, dans lequel le mécanisme de décharge de liquide (14) comprend un premier élément d'étanchéité (145), et le premier élément d'étanchéité (145) est disposé sur une surface de la base (1422) tournée vers le siège de soupape (141) ; et le premier élément d'étanchéité (145) est configuré comme suit:
lorsque l'élément de déformation (143) n'est pas en contact avec le liquide cible, le premier élément d'étanchéité (145) est disposé de manière étanche entre le siège de soupape (141) et la base (1422) ; et
après que l'élément de déformation (143) est entré en contact avec le liquide cible, au moins une partie du premier élément d'étanchéité (145) se détache d'au moins l'un du siège de soupape (141) et de la base (1422), provoquant ainsi la formation du canal de décharge de liquide (144) entre le siège de soupape (141) et la base (1422).

6. Mécanisme de décharge de liquide (14) selon l'une quelconque des revendications 1 à 5, dans lequel une partie de limitation (1421a) est formée sur le mandrin (1421), le mécanisme de décharge de liquide (14) comprenant en outre un élément élastique (146), et l'élément élastique (146) est en appui entre la partie de limitation (1421a) et le siège de soupape (141) selon la direction axiale du mandrin (1421) ; en option, la partie de limitation (1421a) est formée sur une partie du mandrin (1421) faisant saillie à l'extérieur du siège de soupape (141), et la partie de limitation (1421a) fait saillie le long d'une périphérie du mandrin (1421).

7. Mécanisme de décharge de liquide (14) selon l'une quelconque des revendications 1 à 5, dans lequel l'élément de déformation (143) est un élément gonflant absorbant le liquide.

8. Mécanisme de décharge de liquide (14) selon l'une quelconque des revendications 1 à 7, dans lequel le siège de soupape (141) est pourvu d'une baïonnette (1412), et la baïonnette (1412) est raccordée entre l'extérieur et la chambre de montage (1411).

9. Boîtier de batterie (10), comprenant :
un corps de boîtier (13) ayant en son sein une cavité de logement (131), dans lequel le corps de boîtier (13) est pourvu d'un trou de raccordement (132) permettant une communication entre l'extérieur et la cavité de logement (131) ; et
un mécanisme de décharge de liquide (14) monté dans le trou de raccordement (132) ;
dans lequel ce mécanisme de décharge de liquide (14) est le mécanisme de décharge de liquide (14) selon l'une quelconque des revendications 1 à 8.

10. Boîtier de batterie (10) selon la revendication 9, dans lequel le mécanisme de décharge de liquide (14) comprend un second élément d'étanchéité (147), et le second élément d'étanchéité (147) est raccordé de manière étanche entre le corps de boîtier (13) et le siège de soupape (141) ; ou le siège de soupape (141) dans le mécanisme de décharge de liquide (14) est pourvu de la baïonnette (1412) raccordée entre l'extérieur et la chambre de montage (1411), le siège de soupape (141) est monté dans le trou de raccordement (132) par l'intermédiaire de la baïonnette (1412), et une extrémité de la baïonnette (1412) est en appui contre une paroi de la cavité de logement (131).

11. Boîtier de batterie (10) selon la revendication 9, dans lequel le corps de boîtier (13) comprend un couvercle supérieur (133), une plaque latérale (134) et une plaque de fond (135), le couvercle supérieur (133), la plaque latérale (134) et la plaque de fond (135) délimitant conjointement la cavité de logement (131), et le trou de raccordement (132) étant ménagé dans la plaque de fond (135).

12. Boîtier de batterie (10) selon la revendication 11, dans lequel au moins deux trous de raccordement (132) de ce type sont prévus, et les trous de raccordement (132) sont chacun disposés uniformément le long d'un bord extérieur de la plaque de fond (135).

13. Boîtier de batterie (10) selon la revendication 11, dans lequel la plaque de fond (135) est pourvue d'une partie de guidage d'écoulement, et la partie de guidage d'écoulement est configurée pour guider le liquide cible vers le trou de raccordement (132) ; en option, la partie de guidage d'écoulement est réalisée sous la forme d'une rainure de guidage d'écoulement, et une hauteur d'une paroi de fond de la rainure de guidage d'écoulement augmente progressivement d'une extrémité raccordée au trou de raccordement (132) vers l'autre extrémité.

14. Batterie (100), comprenant le boîtier de batterie (10) selon l'une quelconque des revendications 9 à 13 et un élément de batterie (20) logé dans la cavité de logement (131).

15. Appareil électrique, comprenant la batterie (100) selon la revendication 14, dans lequel la batterie (100) est configurée pour fournir de l'énergie électrique.
